Europäisches Patentamt

European Patent Office

Office européen des brevets

(19)

(11) **EP 1 306 807 A2**

(12) **EUROPEAN PATENT APPLICATION**

(43) Date of publication:
02.05.2003 Bulletin 2003/18

(51) Int Cl.7: **G06T 11/00**

(21) Application number: **02257039.4**

(22) Date of filing: **10.10.2002**

| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **12.10.2001 US 976621**<br><br>(71) Applicant: **GENERAL ELECTRIC COMPANY**<br>**Schenectady, NY 12345 (US)** | (72) Inventors:<br>• **Claus, Bernhard Erich Hermann**<br>  **Niskayuna, New York 12309 (US)**<br>• **Eberhard, Jeffrey Wayne**<br>  **Albany, New York 12205 (US)**<br><br>(74) Representative: **Goode, Ian Roy et al**<br>**GE LONDON PATENT OPERATION,**<br>**Essex House,**<br>**12/13 Essex Street**<br>**London WC2R 3AA (GB)** |

(54) **A tomographic image reconstruction method for tomosynthesis**

(57) A method (60) for reconstructing a three-dimensional radiographic image includes acquiring (62) views of an object from at least two projection angles with a medical imaging system. The medical imaging system includes at least one radiation source and at least one detector array to generate projection data of the object. The method also includes backprojecting (64) the projection data across an imaged volume, and processing (66) the backprojected data using a non-linear operator (68) to generate a plurality of medical images representative of the imaged object.

FIG 2

## Description

This invention relates generally to tomosynthesis and more particularly to a method and apparatus for performing a reconstruction algorithm.

In at least some known imaging systems, a radiation source projects a cone-shaped beam which passes through the object being imaged, such as a patient and impinges upon a rectangular array of radiation detectors. In some known tomosynthesis systems, the radiation source rotates with a gantry around a pivot point, and views of the object are acquired for different projection angles. As used herein "view" refers to a single projection image or, more particularly, "view" refers to a single projection radiograph which forms a projection image. Also, as used herein, a single reconstructed (cross-sectional) image, representative of the structures within the imaged object at a fixed height above the detector, is referred to as a "slice". And a collection (or plurality) of views is referred to as a "projection dataset." A collection of (or a plurality of) slices for all heights is referred to as a "three-dimensional dataset representative of the image object."

One known method of reconstructing a three-dimensional dataset representative of the imaged object is known in the art as simple backprojection, or shift-and-add. Simple backprojection backprojects each view across the imaged volume, and averages the backprojected views. A "slice" of the reconstructed dataset includes the average of the backprojected images for some considered height above the detector. Each slice is representative of the structures of the imaged object at the considered height, and the collection of these slices for different heights, constitutes a three-dimensional dataset representative of the imaged object.

In some known imaging systems, a high contrast structure within the imaged object leads to high contrast regions within each of the acquired views. The backprojection "streaks" generated by these high contrast regions intersect at the true location of the structure, and thus generate a high contrast reconstruction in this location. However, in locations where backprojections from only a single view or a few views indicate the possible presence of a high contrast structure, these backprojections may generate artifacts as they bias the reconstructed value at this location towards the presence of a relatively high contrast structure. Depending on the particular structure of the imaged object, this problem may represent an obstacle in obtaining a clear interpretation of the three-dimensional dataset representative of the imaged object, and , for example in medical imaging, potentially prevent the detection of lesions.

According to the present invention, there is provided a method for reconstructing a three-dimensional dataset representative of the imaged object including acquiring views of an object from at least two projection angles with a medical imaging system. The medical imaging system includes at least one radiation source and at least one detector array to generate a set of views, i.e., a projection dataset of the object. The method also includes backprojecting the views across an imaged volume, and processing the backprojected views using a non-linear operator to generate a plurality of slices representative of the imaged object.

The invention also provides a medical imaging system for reconstructing a three-dimensional dataset representative of the imaged object. The medical imaging system includes at least one detector array, at least one radiation source, and a computer coupled to the detector array and the radiation source. The computer is configured to acquire views of an object from at least two projection angles to generate a projection dataset of the object, backproject the views across an imaged volume, and process the backprojected views using a non-linear operator to generate a plurality of slices representative of the imaged object.

In another aspect, the invention provides a computer readable medium encoded with a program executable by a computer for reconstructing a three-dimensional dataset representative of the imaged object. The program is configured to instruct the computer to acquire views of an object from at least two projection angles to generate a projection dataset of the object, backproject the views across an imaged volume, and process the backprojected views using a non-linear operator to generate a plurality of slices representative of the imaged object.

Embodiments of the invention will now be described, by way of example, with reference to the accompanying drawings, in which:

Figure 1 is a pictorial view of an imaging system.

Figure 2 is a flow diagram of a method including acquiring views of an object.

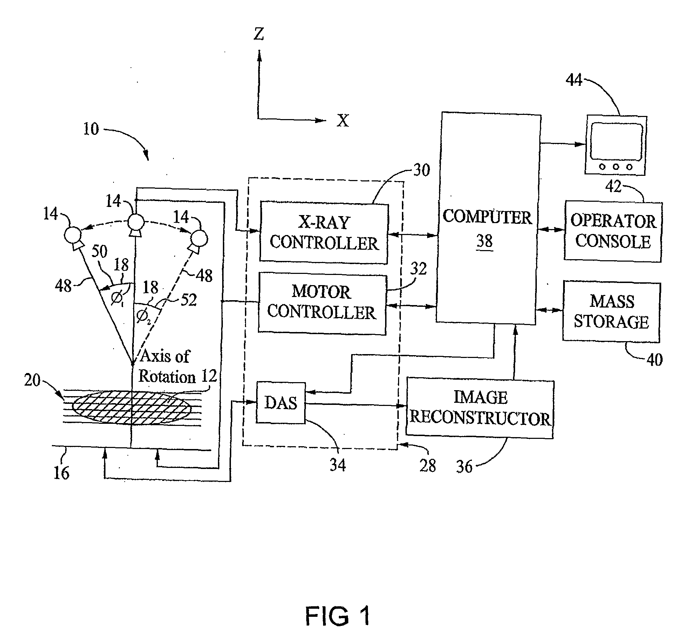

Referring to Figure 1 and in an exemplary embodiment, a digital imaging system 10 generates a three-dimensional dataset representative of an imaged object 12, such as a patient's breast 12 in mammographic tomosynthesis. System 10 includes at least one radiation source 14, such as an x-ray source 14, and at least one detector array 16 for collecting views from a plurality of projection angles 18. Specifically and in one embodiment, system 10 includes a radiation source 14 which projects a cone-shaped beam of x-rays which pass through object 12 and impinge on detector array 16. The views obtained at each angle 18 can be used to reconstruct a plurality of slices, i.e., images representative of structures located in planes 20 parallel to detector 16. Detector array 16 is fabricated in a panel configuration having a plurality of pixels (not shown) arranged in rows and columns so that a view is generated for an entire object of interest such as breast 12. In one embodiment, for example for imaging of the lung, detector array 16 is a chest detector array 16 and object 12 is a patient's chest 12. In one embodiment, each pixel of detector array 16 includes a photosensor, such as a photodiode, that is coupled via a switching transistor to two separate address lines, a scan line and a data line. The radiation incident on a scintillator material and the pixel photosensors measure, by way of change in the charge across the diode, the amount of light generated by x-ray interaction with the scintillator.

As a result, each pixel of detector array 16 produces an electronic signal that represents the intensity, after attenuation by object 12, of an x-ray beam impinging on the pixel of detector array 16. In one embodiment, detector array 16 is approximately 20 cm by 20 cm and is configured to produce views for an entire object of interest, e.g., breast 12. Alternatively, detector array 16 is variably sized depending on the intended use.

In another embodiment, alternative detector technology is used, such that views in digital form are generated by detector 16. In one embodiment, the reconstructed three-dimensional dataset is not arranged in slices corresponding to planes that are parallel to detector 16, but in a more general fashion. In another embodiment, the reconstructed dataset consists only of a single two-dimensional image, or one-dimensional function. In yet another embodiment, detector 16 is a shape other than planar.

In one embodiment, radiation source 14 and detector array 16 are moveable relative to the object 12 and each other. More specifically, radiation source 14 and detector array 16 are translatable so that the projection angle 18 of the imaged volume is altered. Radiation source 14 and detector array 16 are translatable such that projection angle 18 may be any acute or oblique projection angle.

The operation of radiation source 14 is governed by a control mechanism 28 of imaging system 10. Control mechanism 28 includes a radiation controller 30 that provides power and timing signals to radiation source 14 and a motor controller 32 that controls the respective translation speed and position of radiation source 14 and detector array 16. A data acquisition system (DAS) 34 in control mechanism 28 samples digital data from detector 16 for subsequent processing. An image reconstructor 36 receives sampled and digitized projection dataset from DAS 34 and performs high speed image reconstruction, as described herein. The reconstructed three-dimensional dataset, representative of imaged object 12, is applied as an input to a computer 38 which stores the three-dimensional dataset in a mass storage device 40. Image reconstructor 36 is programmed to perform functions described herein, and, as used herein, the term image reconstructor refers to computers, processors, microcontrollers, microcomputers, programmable logic controllers, application specific integrated circuits, and other programmable circuits.

Computer 38 also receives commands and scanning parameters from an operator via console 42 that has an input device. A display 44, such as a cathode ray tube and a liquid crystal display (LCD) allows the operator to observe the reconstructed three-dimensional dataset and other data from computer 38. The operator supplied commands and parameters are used by computer 38 to provide control signals and information to DAS 34, motor controller 32, and radiation controller 30.

In use, a patient is positioned so that the object of interest 12 is within the field of view of system 10, i. e., breast 12 is positioned within the imaged volume extending between radiation source 14 and detector array 16. Views of breast 12, are then acquired from at least two projection angles 18 to generate a projection dataset of the volume of interest. The plurality of views represent the tomosynthesis projection dataset. The collected projection dataset is then utilized to generate a three-dimensional dataset, i.e., a plurality of slices for scanned breast 12, representative of the three-dimensional radiographic representation of imaged breast 12. After enabling radiation source 14 so that the radiation beam is emitted at first projection angle 50, a view is collected using detector array 16. Projection angle 18 of system 10 is then altered by translating the position of source 14 so that central axis 48 of the radiation beam is altered to a second projection angle 52 and position of detector array 16 is altered so that breast 12 remains within the field of view of system 10. Radiation source 14 is again enabled and a view is collected for second projection angle 52. The same procedure is then repeated for any number of subsequent projection angles 18.

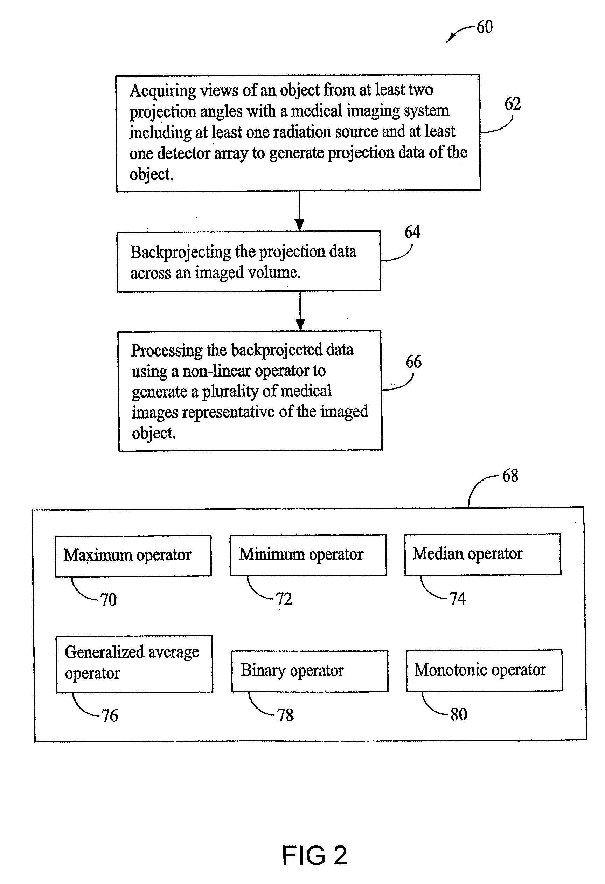

Figure 2 is a flow diagram of a method 60 including acquiring views 62 of an object 12, such as a breast 12, from at least two projection angles with medical imaging system 10 (shown in Figure 1), such as a tomosynthesis imaging system and a CT imaging system, to generate a projection dataset of object 12. Imaging system 10 includes at least one radiation source 14 and at least one detector array 16. The views are backprojected 64 across an imaged volume by image reconstructor 36. The backprojected data is processed 66 using a non-linear operator 68 and further processed by image reconstructor 36 to generate a plurality of slices, representative of the imaged object, that are stored by computer 38 in storage device 40 for viewing on display 44. Because design choices are available in which distributed processing of views and images in various image reconstructors 36 is performed, it will be understood that the invention is not limited to embodiments in which all processing is performed by a discrete image reconstructor 36. In one embodiment, computer 38 performs functions of image reconstructor 36.

In use, non-linear operator 68 facilitates an improvement in image quality and diagnostic value in procedures such as chest tomosynthesis. In chest tomosynthesis, the ribs, in particular, are high-contrast structures which interfere with the visibility of other structures, such as lung nodules, for the detection of lung cancer. Tomosynthesis in combination with non-linear operator 68 facilitates a reduction in image reconstruction artifacts generated by the ribs. In breast imaging, non-linear operator 68 facilitates a reduction in streak artifacts in the reconstructed three-dimensional dataset since a high-contrast calcification may be reproduced in standard simple backprojection as a plurality of low-contrast copies at any slice at an incorrect location in the imaged volume. Further, high contrast imaging markers may be used to allow for correction of inaccuracies in the imaging geometry during acquisition 62 of views. For example, a plurality of imaging markers is placed within the imaged volume prior to being scanned to facilitate reconstruction of the specific geometry from the acquired projection images. Non-linear operator 68 facilitates a reduction in the artifacts generated by the imaging markers. Additionally, object 12, being present in 3D space, implies that all x-rays through a point within object 12 "see" object 12. If only a single view indicates that there is no part of object 12 present at a particular point, then there is sufficient information to conclude that there is no part of object 12 present at this point, and non-linear operator 68 can be used to generate the correct (no-contrast) reconstruction at this particular point.

Non-linear operators 68 suitable for non-linear reconstruction include, but are not limited to, operators from order statistics such as maximum, minimum, or median. Additionally, weighted, or otherwise modified versions of non-linear operator 68 described above may be used. In one embodiment a reconstruction algorithm is:

$$V(x,y,z)=f(P_1(x,y,z),...,P_N(x,y,z))$$

where V denotes the value of the reconstructed three-dimensional dataset at the location (x,y,z), f denotes non-linear operator 68, and $P_n(x,y,z)$ denotes the gray level value of view n at the pixel corresponding to the ray passing through the 3D point (x,y,z). In another embodiment, the views P are obtained by preprocessing the initial images obtained as the detector output.

In one embodiment, non-linear operator 68 is a maximum operator 70 such that:

$$f(P_1,...,P_N)=max(P_1,...,P_N)=Q_N$$

In another embodiment non-linear operator 68 is a minimum operator 72 such that:

$$f(P_1,...,P_N)=min(P_1,...,P_N)=Q_1$$

For both maximum operator 70 and minimum operator 72,

$$Q_1=P_{j(1)}, \ Q_2=P_{j(2)},...,Q_N=P_{j(N)}$$

such that $Q_i \leq Q_{i+1}$, i.e., the variables $Q_i$, denote the sorted set of gray level values at locations within the views associated with the corresponding location in 3D space. In one embodiment, different locations (x,y,z) will correspond to different values $P_i(x,y,z)$, and therefore will have different orderings for different regions in the reconstructed volume.

In use, maximum operator 70 assigns a gray level value of the view to location (x,y,z) which corresponds to the ray passing through location (x,y,z) which experienced the least attenuation. Minimum operator 72 assigns a gray level value of the view to location (x,y,z) which corresponds to the ray passing through location (x,y,z) which experienced the most attenuation. In one embodiment, maximum operator 70 is used to facilitate a reduction in the object boundary artifacts, and artifacts from relatively small high-contrast structures such as calcifications in a breast.

In one embodiment non-linear operator 68 is a median operator 74 such that:

$$f(P_1,...,P_N)=median(P_1,...,P_N)=Q_{\frac{(N+1)}{2}}.$$

A generalized median operator 74 can be written as:

$$f(P_1,...,P_N)=Q_K$$

for some fixed value wherein $1 \leq K \leq N$, where the variables $Q_i$, denote the sorted set of gray level values associated with the corresponding location in 3D space in the different views.

In use, a gray level value of the view is assigned to location (x,y,z) which corresponds to the median gray level value associated with the plurality of rays passing through location (x,y,z). Median operator 74 performs in a comparable manner to maximum operator 70 for the reconstruction of small structures. Additionally, median operator 74 is less sensitive to a misalignment of backprojections for small structures while also introducing a new type of boundary artifact. Further, reconstruction of large high-contrast structures, such as rib bones, appear larger than the actual structure, and the smaller the K value, the larger the reconstructed structures in the image.

In one embodiment non-linear operator 68 is a generalized average operator 76 such that:

$$f(P_1,...,P_N) = \frac{1}{M} \sum_{m=1}^{M} Q_{K+m}$$

In use, a fixed number of the largest and smallest gray level values is discarded to create a subset of remaining gray level values, and the average of these remaining values is used. For example, a "K" and a "M" is chosen, and all $P_i$ where $i \leq K$ or where $i > K+M$ are discarded and the average of all $P_i$ where $i > K$ and $i \leq K+M$ are used. One of the values "K" or "N-K-M" may be equal to zero. Generalized average operator 76 allows for a trade-off between noise sensitivity and minimization of artifacts.

In one embodiment non-linear operator 68 is a binary operator 78 which includes a binary maximum operator such that

$$f(P_1,...,P_N)=\max(g(P_1),...,g(P_N))=g(Q_N)$$

where

$$g(x) = 1 \text{ if } x \geq c, \text{ and } g(x) = 0, \text{ if } x < c;$$

and

a binary minimum operator such that

$$f(P_1,...,P_N)=\min(g(P_1),...,g(P_N))=g(Q_1)$$

where

$$g(x) = 1 \text{ if } x \geq c,$$

and

$$g(x) = 0, \text{ if } x < c.$$

The variables $Q_i$, denote the sorted set of gray level values at locations within the views associated with the corresponding location in 3D space. With the binary maximum operator, a parameter "c" can be selected such that $P_n < c$ if the projection at the corresponding location experiences attenuation by some structure within the imaged volume. In this case, the reconstruction indicates "structure present" at some point (x,y,z) if and only if every single view indicates the presence of a structure at the respective corresponding location. This approach facilitates a reconstruction of "binary" objects, i.e., where object 12 (shown in Figure 1) is essentially composed of two different materials, one "structure" material and one "background" material. With the binary minimum operator, the "c" can be selected to suppress artifacts stemming from low-attenuation structures in a high attenuating background.

In one embodiment non-linear operator 68 is a monotonic operator 80 denoted as "g" according to:

$$f(P_1,...,P_N) = g^{-1}\left[\frac{1}{N}\sum g(P_n)\right],$$

or, more generally

$$f(P_1,...,P_N) = g^{-1}\left[\frac{1}{M}\sum_{m=1}^{M} Q_{K+m}\right]$$

In one embodiment, monotonic operator 80 is a monotonically increasing (non-decreasing) operator such that $g(x') \geq g(x)$ whenever $x' > x$. In an alternative embodiment, monotonic operator 80 is a monotonically increasing (strictly increasing) operator such that $g(x') > g(x)$ whenever $x' > x$. In another embodiment, monotonic operator 80 is a monotonically decreasing (non-increasing) operator such that $g(x') \leq g(x)$ whenever $x' > x$. In an alternative embodiment, monotonic operator 80 is a monotonically decreasing (strictly decreasing) operator such that $g(x') < g(x)$ whenever $x' > x$.

In an alternative exemplary embodiment, a non-linear reconstruction of the volume of interest is performed using a non-linear operator 68, such as but not limited to, a generalized average operator 76. Because the maximum thickness of the imaged object is assumed to be known, the separation between slices, as well as the number of slices can be chosen such that the reconstructed three-dimensional dataset corresponds to the full volume of the imaged object. A non-linear reconstruction using non-linear operator 68 is performed on each slice. At each location, in each slice, depending on the chosen parameters of the reconstruction process, the backprojected gray level values of some views are discarded while the remaining gray level values are used to reconstruct the gray level value of that pixel in the corresponding slice. For example, using generalized average operator 76, as previously described herein, a fixed number of the largest and smallest values which were previously discarded to create a subset of remaining gray level values, are instead retained. For each of these retained values, the difference to the actually computed reconstructed gray level value at the considered location in the considered slice is determined. The difference relates to an "unused contrast" of the retained value of the considered pixel. For each pixel, of each view, the unused contrast is summed across all reconstructed slices, and this sum, referred to as a "cumulative unused contrast", is stored in memory. Additionally, the number of slices where a backprojected pixel does and does not contribute, are also stored in memory, for each pixel, and each view. As used herein, the collection of these numbers are referred to as a "contribution count".

The contrast for a given pixel in a view, which does not contribute to the reconstruction of some slices can be used to enhance the image quality of the reconstructed slices according to the process herein, i.e. this pixel does not contribute to this slice, consequently the contrast at the corresponding location in slices where it does contribute can be modified correspondingly. For each pixel in each view, the differences between the backprojected pixel value which is now retained and the actually computed reconstruction value at this location are summed for all reconstructed slices, and the resulting cumulative unused contrast is stored in memory. Additionally, the number of slices where a backprojected pixel does and does not contribute, are also stored in memory, for each pixel, and for each view.

By performing non-linear reconstruction of the whole imaged volume, the number of slices where each individual pixel of each view contributes to the reconstruction, as well as the cumulative unused contrast of this pixel can be determined for each pixel in each view. The cumulative unused contrast for each pixel of each view is then distributed across the locations within the slices where the corresponding pixel actually did contribute. Distributing the unused contrast can be accomplished, for example, by updating the views, and using the updated views as input for a new non-linear reconstruction. Views are updated by modifying the gray level of each pixel in each view according to the associated cumulative unused contrast and the contribution count, i.e., the number of slices where that pixel did contribute. In one embodiment, the gray level value of each pixel is modified by adding the associated cumulative unused contrast divided by the number of slices where that pixel did contribute to the reconstruction. The updated views can then be used to compute an enhanced reconstruction of any arbitrary horizontal slice through object 12 as well as an enhanced reconstruction of the full three-dimensional dataset.

In use, as discussed above, performing nonlinear reconstruction of the whole imaged volume generates a three-dimensional dataset with a low level of artifacts from very high gray level value or very low gray level value structures within the imaged object. In one embodiment, for example, very high gray level values of a pixel in a view are discarded in the reconstruction of many slices, and the average gray level value of the reconstructed three-dimensional dataset at the corresponding locations in all slices is much smaller than the pixel value in the view. The enhancement of the reconstructed three-dimensional dataset using the cumulative unused contrast as well as the number of slices where that pixel did contribute to the reconstruction, minimizes this inconsistency. In one embodiment, the views are enhanced by adding to each pixel in each view the corresponding cumulative unused contrast divided by the corresponding number of slices where that pixel did contribute to the reconstruction. In other words, the unused contrast is divided by the number of slices where that pixel did contribute to the reconstruction and then added to the gray level value of the pixel in the view. This enhancement of views, followed by a repeat nonlinear reconstruction of the volume of interest using nonlinear operator 68 accomplishes an enhancement of the reconstructed three-dimensional dataset.

In an alternative embodiment, each view can be separated into a coarse scale image and a fine scale image, also referred to as detail image. These images are then enhanced, either by performing a nonlinear reconstruction on each of the coarse scale and fine scale projection datasets separately, and updating all views using the corresponding cumulative unused contrast and the number of slices where the respective pixels did not contribute to the reconstruction, or by some other suitable enhancement method. The enhanced coarse scale and fine scale views are then combined into enhanced views, and this enhanced projection dataset is used as input for a second nonlinear reconstruction, thus yielding an enhanced reconstructed three-dimensional dataset. In use, the separation of views into coarse scale and detail images can lead to an enhanced computational speed and a reduced sensitivity to image noise.

For completeness, various aspects of the invention are set out in the following numbered clauses:

1. A method (60) for reconstructing a three-dimensional dataset representative of an imaged object (12), said method comprising:

acquiring (62) views of an object from at least two projection angles (18) with an imaging system (10) including at least one radiation source (14) and at least one detector array (16) to generate a projection dataset of the object;
backprojecting (64) the views across an imaged volume; and
processing (66) the backprojected data using a non-linear operator (68) to generate a three-dimensional dataset consisting of a plurality of images representative of the imaged object.

2. A method (60) in accordance with Clause 1, wherein acquiring (62) views of an object (12) from at least two projection angles (18) with an imaging system (10) comprises acquiring views of an object with one of a computed tomography (CT) detector array, a mammographic detector array, and a chest detector array (16).

3. A method (60) in accordance with Clause 1 wherein processing (66) the backprojected data using a non-linear operator (68) comprises processing the backprojected data using a maximum operator (70).

4. A method (60) in accordance with Clause 1 wherein processing (66) the backprojected data using a non-linear operator (68) comprises processing the backprojected data using a minimum operator (72).

5. A method (60) in accordance with Clause 1 wherein processing (66) the backprojected data using a non-linear operator (68) comprises processing the backprojected data using a median operator (74) according to

$$f(P_1,...,P_N)=median(P_1,...,P_N)=Q_{\frac{(N+1)}{2}}.$$

6. A method (60) in accordance with Clause 1 wherein processing (66) the backprojected data using a non-linear operator (68) comprises processing the backprojected data using a generalized median operator (74) wherein said generalized median operator comprises $f(P_1,...,P_N)=Q_K$ for some fixed value K wherein $1\leq K \leq N$.

7. A method (60) in accordance with Clause 1 wherein processing (66) the backprojected data using a non-linear operator (68) comprises processing the backprojected data using a generalized average operator (76).

8. A method (60) in accordance with Clause 1 wherein processing (66) the backprojected data using a non-linear operator (68) comprises processing the backprojected data using a binary operator (78).

9. A method (60) in accordance with Clause 1 wherein processing (66) the backprojected data using a non-linear operator (68) comprises processing the backprojected data using a monotonic operator (80).

10. A method (60) according to Clause 1 further comprising enhancing the generated three-dimensional dataset using unused contrast.

11. A method (60) in accordance with Clause 10, wherein to enhance the generated three-dimensional dataset said method further comprising performing a nonlinear reconstruction using enhanced views.

12. A method (60) in accordance with Clause 11, wherein said method further comprising computing enhanced views from the original views using unused contrast and a contribution count.

13. A method (60) for reconstructing a three-dimensional dataset representative of an imaged object (12), said method comprising:

acquiring views (62) of an object from at least two projection angles (18) with a medical imaging system (10) including at least one radiation source (14) and at least one detector array (16) to generate projection data of the object, wherein said at least one detector array comprises one of a computed tomography (CT) detector array, a chest detector array and a mammographic detector array.
backprojecting (64) the views across an imaged volume; and
processing (66) the backprojected data using a non-linear operator (68) to generate a three-dimensional dataset consisting of a plurality of medical images representative of the imaged object, wherein said non-linear operator comprises one of a maximum operator (70), a minimum operator (72), a generalized average operator (76), a binary operator (78), a monotonic operator (80), a median operator (74) according to $f(P_1,...,P_N)=median(P_1,...,P_N)=Q^{\frac{(N+1)}{2}}$, and a generalized median operator according to $f(P_1,...,P_N)=Q_K$ for some fixed value K wherein $1\leq K \leq N$.

14. A medical imaging system (10) for reconstructing a three-dimensional dataset representative of an imaged object (12), said medical imaging system comprising:

a detector array (16);
at least one radiation source (14); and
a computer (38) coupled to said detector array and radiation source and configured to:

acquire views (62) of an object from at least two projection angles (18) to generate projection data of the object;
backproject (64) the views across an imaged volume; and
process (66) the backprojected data using a non-linear operator (68) to generate a three-dimensional dataset consisting of a plurality of medical images representative of the imaged object.

15. A medical imaging system (10) in accordance with Clause 14 wherein said detector array (16) comprises at least one of a computed tomography (CT) detector array, a chest detector array, and a mammographic detector array.

16. A medical imaging system (10) in accordance with Clause 14 wherein to process (66) the backprojected data using a non-linear operator (68), said computer (38) further configured to process the backprojected data using a maximum operator (70).

17. A medical imaging system (10) in accordance with Clause 14 wherein to process (66) the backprojected data using a non-linear operator (68), said computer (38) further configured to process the backprojected data using a minimum operator (72).

18. A medical imaging system (10) in accordance with Clause 14 wherein to process (66) the backprojected data using a non-linear operator (68), said computer (38) further configured to process the backprojected data using a median operator (74) according to $f(P_1,...,P_N)=median(P_1,...,P_N)=Q^{\frac{(N+1)}{2}}$.

19. A medical imaging system (10) in accordance with Clause 14 wherein to process (66) the backprojected data using a non-linear operator (68), said computer (38) further configured to process the backprojected data using a generalized median operator (74) according to $f(P_1,...,P_N)=Q_K$ for some fixed value K wherein $1 \le K \le N$.

20. A medical imaging system (10) in accordance with Clause 14 wherein to process (66) the backprojected data using a non-linear operator (68), said computer (38) further configured to process the backprojected data using a generalized average operator (76).

21. A medical imaging system (10) in accordance with Clause 14 wherein to process (66) the backprojected data using a non-linear operator (68), said computer (38) further configured to process the backprojected data using a binary operator (78).

22. A medical imaging system (10) in accordance with Clause 14 wherein to process (66) the backprojected data using a non-linear operator (68), said computer (38) further configured to process the backprojected data using a monotonic operator (80).

23. A medical imaging system (10) in accordance with Clause 14, said computer (38) further configured to enhance the generated three-dimensional dataset using unused contrast.

24. A medical imaging system (10) in accordance with Clause 10, wherein to enhance the generated three-dimensional dataset said computer (38) further configured to perform a nonlinear reconstruction using enhanced views.

25. A medical imaging system (10) in accordance with Clause 24, wherein said computer (38) further configured to compute enhanced views from the original views using unused contrast and a contribution count.

26. A medical imaging system (10) for reconstructing a three-dimensional dataset representative of an imaged object (12), said medical imaging system comprising:

a detector array (16), said detector array comprising at least one of a computed tomography (CT) detector array, a chest detector array, and a mammographic detector array;
at least one radiation source (14); and
a computer (38) coupled to said detector array and radiation source and configured to:

acquire (62) views of an object from at least two projection angles (18) to generate projection data of the object;
backproject (64) the views across the imaged volume; and
process (66) the backprojected data using a non-linear operator (68) to generate a three-dimensional dataset consisting of a plurality of medical images representative of the imaged object, wherein said non-linear operator comprises one of a maximum operator (70), a minimum operator (72), a generalized average operator (76), a binary operator (78), a monotonic operator (80), a median operator (74) according to $f(P_1,...,P_N)=median(P_1,...,P_N)=Q^{\frac{(N+1)}{2}}$, and a generalized median operator according to $f(P_1,...,P_N)=Q_K$ for some fixed value K wherein $1 \le K \le N$.

27. A computer (38) readable medium encoded with a program executable by a computer for reconstructing a three-dimensional dataset representative of an imaged object (12), said program configured to instruct the computer to:

acquire (62) views of an object from at least two projection angles (18) to generate projection data of the object;
backproject (64) the views across an imaged volume; and
process (66) the backprojected data using a non-linear operator (68) to generate a three-dimensional dataset consisting of a plurality of medical images representative of the imaged object.

28. A computer (38) readable medium in accordance with Clause 27 wherein to acquire (62) views of an object from at least two projection angles (18) with a medical imaging system (10), said program further configured to acquire views of an object with at least one of a computed tomography (CT) detector array and a mammographic detector array (16).

29. A computer (38) readable medium in accordance with Clause 27 wherein to process (66) the backprojected data using a non-linear operator (68), said program further configured to process the backprojected data using a maximum operator (70).

30. A computer (38) readable medium in accordance with Clause 27 wherein to process (66) the backprojected data using a non-linear operator (68), said program further configured to process the backprojected data using a minimum operator (72).

31. A computer (38) readable medium in accordance with Clause 27 wherein to process (66) the backprojected data using a non-linear operator (68), said program further configured to process the backprojected data using a median operator (74) according to $f(P_1,...,P_N)=median(P_1,...,P_N)=Q^{\frac{(N+1)}{2}}$.

32. A computer (38) readable medium in accordance with Clause 27 wherein to process (66) the backprojected data using a non-linear operator (68), said program further configured to process the backprojected data using a generalized median operator (74) according to $f(P_1,...,P_N)=Q_K$ for some fixed value K wherein $1 \leq K < N$.

33. A computer (38) readable medium in accordance with Clause 27 wherein to process (66) the backprojected data using a non-linear operator (68), said program further configured to process the backprojected data using a generalized average operator (76).

34. A computer (38) readable medium in accordance with Clause 27 wherein to process (66) the backprojected data using a non-linear operator (68), said program further configured to process the backprojected data using a binary operator (78).

35. A computer (38) readable medium in accordance with Clause 27 wherein to process (66) the backprojected data using a non-linear operator (68), said program further configured to process the backprojected data using a monotonic operator (80).

36. A computer (38) readable medium in accordance with Clause 27 wherein said program further configured to enhance the generated three-dimensional dataset using unused contrast.

37. A computer (38) readable medium in accordance with Clause 36, wherein to enhance the generated three-dimensional dataset said program further configured to perform a nonlinear reconstruction using enhanced views.

38. A computer (38) readable medium in accordance with Clause 37, wherein said program further configured to compute enhanced views from the original views using unused contrast and a contribution count.

39. A computer (38) readable medium encoded with a program executable by a computer for reconstructing a three-dimensional radiographic image, said program configured to instruct the computer to:

acquire (62) views of an object (12) from at least two projection angles (18) to generate projection data, said program further configured to acquire views of an object with at least one of a computed tomography (CT) detector array, chest detector array, and a mammographic detector array (16);
backproject (64) the views across an imaged volume; and
process (66) the backprojected data using a non-linear operator (68) to generate a three-dimensional dataset consisting of a plurality of medical images representative of the imaged object, wherein said non-linear operator (68) comprises one of a maximum operator (70), a minimum operator (72), an average operator (76), a binary operator (78), a monotonic operator (80), a median operator (74), wherein said median operator comprises $f(P_1,...,P_N)=median(P_1,...,P_N)=Q^{\frac{(N+1)}{2}}$, and a generalized median operator according to $f(P_1,...,P_N)=Q_K$ for some fixed value K wherein $1 \leq K \leq N$.

## Claims

1. A method (60) for reconstructing a three-dimensional dataset representative of an imaged object (12), said method comprising:

acquiring (62) views of an object from at least two projection angles (18) with an imaging system (10) including at least one radiation source (14) and at least one detector array (16) to generate a projection dataset of the object;
backprojecting (64) the views across an imaged volume; and
processing (66) the backprojected data using a non-linear operator (68) to generate a three-dimensional dataset consisting of a plurality of images representative of the imaged object.

2. A method (60) in accordance with Claim 1, wherein acquiring (62) views of an object (12) from at least two projection angles (18) with an imaging system (10) comprises acquiring views of an object with one of a computed tomography (CT) detector array, a mammographic detector array, and a chest detector array (16).

3. A method (60) according to Claim 1 further comprising enhancing the generated three-dimensional dataset using unused contrast.

4. A method (60) for reconstructing a three-dimensional dataset representative of an imaged object (12), said method comprising:

acquiring views (62) of an object from at least two projection angles (18) with a medical imaging system (10) including at least one radiation source (14) and at least one detector array (16) to generate projection data of the object, wherein said at least one detector array comprises one of a computed tomography (CT) detector array, a chest detector array and a mammographic detector array.
backprojecting (64) the views across an imaged volume; and
processing (66) the backprojected data using a non-linear operator (68) to generate a three-dimensional dataset consisting of a plurality of medical images representative of the imaged object, wherein said non-linear operator comprises one of a maximum operator (70), a minimum operator (72), a generalized average operator (76), a binary operator (78), a monotonic operator (80), a median operator (74) according to $f(P_1,...,P_N)=median(P_1,...,P_N)=Q^{\frac{(N+1)}{2}}$, and a generalized median operator according to $f(P_1,...,P_N)=Q_K$ for some fixed value K wherein $1 \le K \le N$.

5. A medical imaging system (10) for reconstructing a three-dimensional dataset representative of an imaged object (12), said medical imaging system comprising:

a detector array (16);
at least one radiation source (14); and
a computer (38) coupled to said detector array and radiation source and configured to:

acquire views (62) of an object from at least two projection angles (18) to generate projection data of the object;
backproject (64) the views across an imaged volume; and
process (66) the backprojected data using a non-linear operator (68) to generate a three-dimensional dataset consisting of a plurality of medical images representative of the imaged object.

6. A medical imaging system (10) in accordance with Claim 5, said computer (38) further configured to enhance the generated three-dimensional dataset using unused contrast.

7. A medical imaging system (10) in accordance with Claim 6, wherein to enhance the generated three-dimensional dataset said computer (38) further configured to perform a nonlinear reconstruction using enhanced views.

8. A medical imaging system (10) for reconstructing a three-dimensional dataset representative of an imaged object (12), said medical imaging system comprising:

a detector array (16), said detector array comprising at least one of a computed tomography (CT) detector array, a chest detector array, and a mammographic detector array;
at least one radiation source (14); and
a computer (38) coupled to said detector array and radiation source and configured to:

acquire (62) views of an object from at least two projection angles (18) to generate projection data of the object;
backproject (64) the views across the imaged volume; and
process (66) the backprojected data using a non-linear operator (68) to generate a three-dimensional dataset consisting of a plurality of medical images representative of the imaged object, wherein said non-linear operator comprises one of a maximum operator (70), a minimum operator (72), a generalized average operator (76), a binary operator (78), a monotonic operator (80), a median operator (74) according to $f(P_1,...,P_N)=median(P_1,...,P_N)=Q^{\frac{(N+1)}{2}}$, and a generalized median operator according to $f(P_1,...,P_N)=Q_K$ for some fixed value K wherein $1 \le K \le N$.

9. A computer (38) readable medium encoded with a program executable by a computer for reconstructing a three-dimensional dataset representative of an imaged object (12), said program configured to instruct the computer to:

acquire (62) views of an object from at least two projection angles (18) to generate projection data of the object;
backproject (64) the views across an imaged volume; and
process (66) the backprojected data using a non-linear operator (68) to generate a three-dimensional dataset consisting of a plurality of medical images representative of the imaged object.

**10.** A computer (38) readable medium encoded with a program executable by a computer for reconstructing a three-dimensional radiographic image, said program configured to instruct the computer to:

acquire (62) views of an object (12) from at least two projection angles (18) to generate projection data, said program further configured to acquire views of an object with at least one of a computed tomography (CT) detector array, chest detector array, and a mammographic detector array (16); backproject (64) the views across an imaged volume; and process (66) the backprojected data using a non-linear operator (68) to generate a three-dimensional dataset consisting of a plurality of medical images representative of the imaged object, wherein said non-linear operator (68) comprises one of a maximum operator (70), a minimum operator (72), an average operator (76), a binary operator (78), a monotonic operator (80), a median operator (74), wherein said median operator comprises $f(P_1,...,P_N)=median(P_1,...,P_N)=Q\frac{(N+1)}{2}$, and a generalized median operator according to $f(P_1,...,P_N)=Q_K$ for some fixed value K wherein $1 \leq K \leq N$.

Z

X

10

14

14

14

14

50

18

48

18

$\phi_1$

48

52

$\phi_2$

Axis of
Rotation 12

20

16

X-RAY
CONTROLLER

30

MOTOR
CONTROLLER

32

DAS

34

IMAGE
RECONSTRUCTOR

28

36

COMPUTER
38

44

42

OPERATOR
CONSOLE

MASS
STORAGE

40

FIG 1

60

Acquiring views of an object from at least two projection angles with a medical imaging system including at least one radiation source and at least one detector array to generate projection data of the object.

62

Backprojecting the projection data across an imaged volume.

64

Processing the backprojected data using a non-linear operator to generate a plurality of medical images representative of the imaged object.

66

68

| Maximum operator | Minimum operator | Median operator |
| --- | --- | --- |
| 70 | 72 | 74 |

| Generalized average operator | Binary operator | Monotonic operator |
| --- | --- | --- |
| 76 | 78 | 80 |

# FIG 2